# EUROPEAN PATENT SPECIFICATION

(11) **EP 2 562 438 B1**
(45) Date of publication and mention of the grant of the patent: **09.12.2015**
(21) Application number: 12178098.5
(22) Date of filing: 26.07.2012
(51) Int. Cl.: F16D 1/06, B62D 1/20

(54) **Shaft coupling structure and steering system**
Schaftkopplungsstruktur und Lenksystem
Structure de couplage d'arbre et système de direction

(30) Priority: 24.08.2011 JP 2011182781
(43) Date of publication of application: 27.02.2013
(73) Proprietor: JTEKT CORPORATION, Osaka-shi Osaka 542-8502 (JP)
(72) Inventor: Otani, Takumitsu, Osaka-shi, Osaka 542-8502 (JP)
(74) Representative: Winter, Brandl, Fürniss, Hübner, Röss, Kaiser, Polte - Partnerschaft mbB

(56) References cited:
- JP-A- 2003 285 746
- JP-A- 2011 088 508
- JP-U- H0 282 673
- US-A1- 2005 218 642

## Description

### BACKGROUND OF THE INVENTION

### 1. Field of the Invention

The invention relates to a shaft coupling structure and a steering system that has the shaft coupling structure. 2. Discussion of Background

In a steering system for a vehicle, steering force applied to a steering wheel is transmitted to a rack shaft via a rack-and-pinion mechanism. A steering shaft is formed of a column shaft, an upper universal joint, an intermediate shaft, a lower universal joint, and a pinion shaft. The column shaft is connected to the steering wheel that is a steering member.

Japanese Patent Application Publication No. 2010-084893 (JP 2010-084893 A) describes a structure in which a lower universal joint and a pinion shaft are connected to each other by fitting an upper end portion of the pinion shaft to a lower joint yoke of the lower universal joint.

In a steering system described in JP 2010-084893 A, the upper end portion of the pinion shaft is positioned with respect to the lower joint yoke of the lower universal joint in the circumferential direction of the shaft. The lower joint yoke of the lower universal joint has a connection hole, an inner wall that defines the connection hole and that has serrations, and a positioning slit. The pinion shaft has serrations and a protrusion at its upper end portion. The protrusion is inserted into the slit of the lower universal joint.

The lower joint yoke of the lower universal joint has a through-hole through which a bolt is passed in a direction perpendicular to the shaft. In addition, the protrusion of the upper end portion of the pinion shaft has a cutout recess at a position that coincides with the position of the through-hole when the protrusion is fitted in the slit of the lower joint yoke of the lower universal joint. In a state where the upper end portion of the pinion shaft is fitted to the lower joint yoke of the lower universal joint, the bolt is inserted in the through-hole and is fixedly screwed.

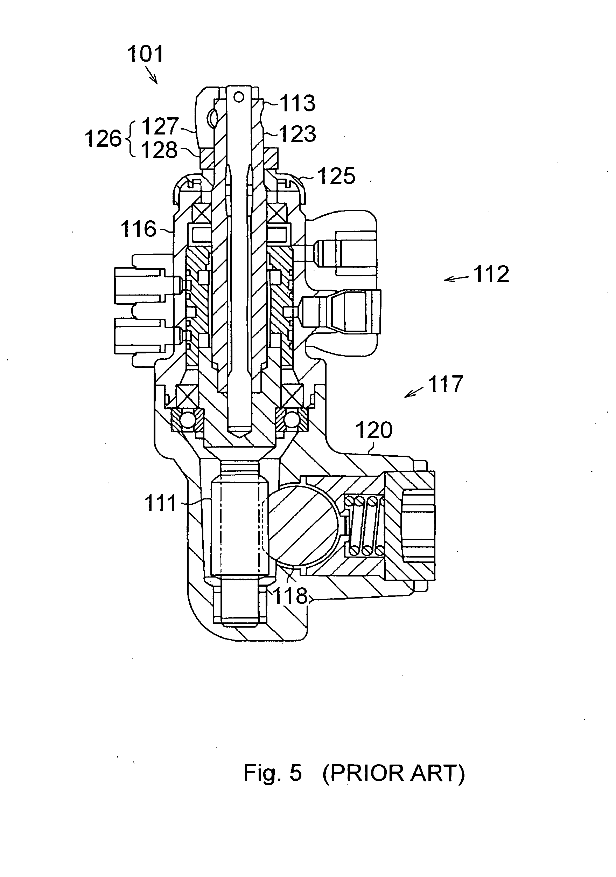

In addition, as shown in FIG. 5 as related art, there is a steering system 101 that includes a hydraulic power steering that assists movement of a rack shaft using hydraulic pressure as a driving source. In the above steering system 101, a rotary valve 112 is provided at an upper end side of a pinion shaft 111. An input shaft 113 of the rotary valve 112 is covered with a valve housing 116 of the rotary valve 112 with the upper end portion of the input shaft 113 protruding from the valve housing 116. The valve housing 116 is connected to a rack housing 120 that accommodates a rack-and-pinion mechanism 117. The rack-and-pinion mechanism 117 is formed of a rack shaft 118 and the pinion shaft 111.

A dust cover 125 is arranged between the input shaft 113 and an upper end opening of the valve housing 116. The dust cover 125 prevents entry of dust into the valve housing 116. A guide tip 126 is attached at an upper end of the input shaft 113. The guide tip 126 serves as a positioning member for positioning the input shaft 113 with respect to a slit of a lower joint yoke of a lower universal joint. The guide tip 126 includes a guide portion 127 and a ring portion 128. The guide portion 127 is inserted into the slit. The ring portion 128 is fitted onto serrations 123 formed on an outer periphery of the upper end of the input shaft 113. A lower face of the ring portion 128 contacts the upper face of the dust cover 125. In this way, the guide tip 126 is positioned in an axial direction.

In order to facilitate mounting of the steering system in a vehicle, it is desired that the steering system should be more compact, and, particularly, the axial length of the pinion shaft 111 (input shaft 113) should be reduced. Note that not only the steering system 101 that includes the rotary valve 112 but also a steering system in which a pinion shaft 111 accommodated in a rack housing 120 is directly fitted to a lower joint yoke of a lower universal joint has a similar problem.

In addition, not only a steering system but also a coupling structure in which a shaft member that is accommodated in a housing with its one end protruding from the housing is positioned with respect to a joint yoke of a universal joint in a circumferential direction and fitted to the joint yoke has a similar problem. Therefore, there is a demand for a coupling structure that allows reduction of the axial length of a shaft member.
A vehicle steering system including a phase setting clip for absorbing sound is known from US 2005/0218642A1. The clip consists of a first annular portion as a sound insulator, a second annular portion as fitted over a small-diameter portion of a shaft and an arm portion connecting the both portions.
A similar mounting structure of a steering column joint including an annular cap portion and an annular bottom portion is known from JP 2003-285746 A. Both portions are connected to one another by a arm portion.

### SUMMARY OF THE INVENTION

The invention provides a coupling structure that allows reduction of the axial length of a shaft member, and a steering system that has the coupling structure.

According to a feature of an example of the invention, there is provided a guide cover that has a cover portion and a guide portion, which are formed integrally with each other, and that is fitted around a shaft member so as to be rotatable together with the shaft member. The cover portion is attached to and covers an opening of the shaft housing, and it is adapted to prevent entry of dust into the housing. Therefore, it is possible to reduce the axial length as compared with the related art. In addition, because the number of members is reduced, it is possible to improve the efficiency of assembly.

According to another feature of an example of the invention, when the shaft member is fitted to a tubular member, an open end portion of the tubular member contacts a step formed on an upper face of the guide cover to thereby make it possible to position the tubular member with respect to the shaft member. Therefore, it is possible to easily fit the shaft member and the tubular member to each other.

According to a further feature of an example of the invention, because the guide cover is press-fitted to the shaft member, it is possible to prevent separation of the guide cover and the shaft member from each other, and it is possible to increase sealing performance.

### BRIEF DESCRIPTION OF THE DRAWINGS

The foregoing and further objects, features and advantages of the invention will become apparent from the following description of example embodiment with reference to the accompanying drawings, wherein like numerals are used to represent like elements and wherein:
FIG. 1 is a perspective view that shows a coupling structure for coupling a lower universal joint and a pinion shaft of a steering system to each other;
FIG. 2 is a sectional view that shows a rotary valve provided with the pinion shaft and a rack-and-pinion mechanism;
FIG. 3 is a sectional view that shows a guide cover attached to the upper end of the pinion shaft;
FIG. 4 is a perspective view that shows the guide cover; and
FIG. 5 is a sectional view that shows a rotary valve provided with a pinion shaft and a rack-and-pinion mechanism in related art.

### DETAILED DESCRIPTION OF EMBODIMENTS

Hereinafter, embodiments of the invention will be described with reference to the accompanying drawings.

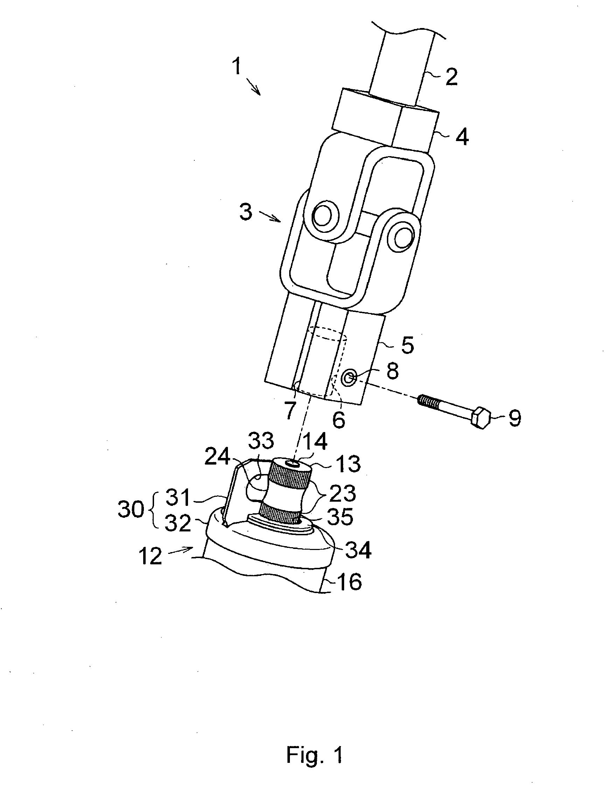

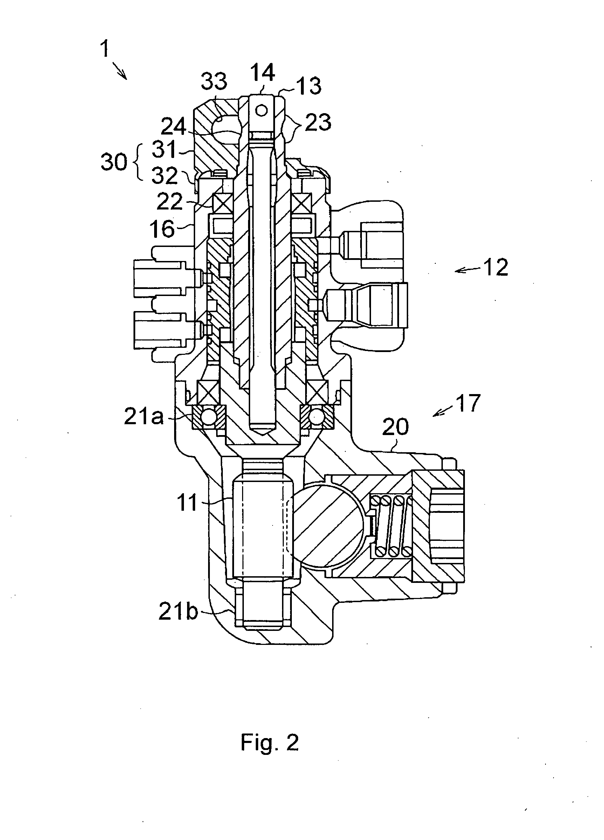

As shown in FIG. 1 and FIG. 2, a steering system 1 for a vehicle includes a pinion shaft 11, a lower universal joint 3, and an intermediate shaft 2. The pinion shaft 11 is in mesh with a rack shaft. The lower universal joint 3 is connected to the pinion shaft 11. The intermediate shaft 2 is connected to the lower universal joint 3. The pinion shaft 11 is connected to the lower universal joint 3 via a lower joint yoke 5 that may function as a tubular member. The intermediate shaft 2 is connected to an upper side of the lower universal joint 3 via an upper joint yoke 4.

As shown in FIG. 2, the steering system 1 includes a rotary valve 12. An input shaft 13 of the rotary valve 12 is connected to the upper end side of the pinion shaft 11 via a torsion bar 14. The input shaft 13 is covered with a valve housing 16 of the rotary valve 12 with the upper end of the input shaft 13 protruding from the valve housing 16. The valve housing 16 is assembled to a rack housing 20 that accommodates a rack-and-pinion mechanism 17. The pinion shaft 11 is rotatably supported by bearings 21a, 21b that are fitted to the rack housing 20. Note that the input shaft 13 may function as a shaft member, and is connected to the pinion shaft 11 via the torsion bar 14.

A seal member 22 is provided inside the upper end side portion of the valve housing 16. The seal member 22 prevents entry of water into the valve housing 16. In addition, a guide cover 30 is attached to an upper end opening portion of the valve housing 16. The guide cover 30 prevents entry of dust into the valve housing 16, and positions the input shaft 13 with respect to the lower universal joint 3 in the circumferential direction.

As shown in FIG. 1, the lower joint yoke 5 of the lower universal joint 3 has a connection hole 6, an inner wall that defines the connection hole 6 and that has serrations, and a slit 7. The input shaft 13 has serrations 23 at its upper end portion. The serrations formed around the connection hole 6 are engaged with the serrations 23. A groove 24 is formed along the entire circumference of the axially middle portion of the serrations 23. The lower joint yoke 5 has a tapped hole 8. A bolt 9 is passed through the tapped hole 8 in a direction perpendicular to the axial direction of the input shaft 13.

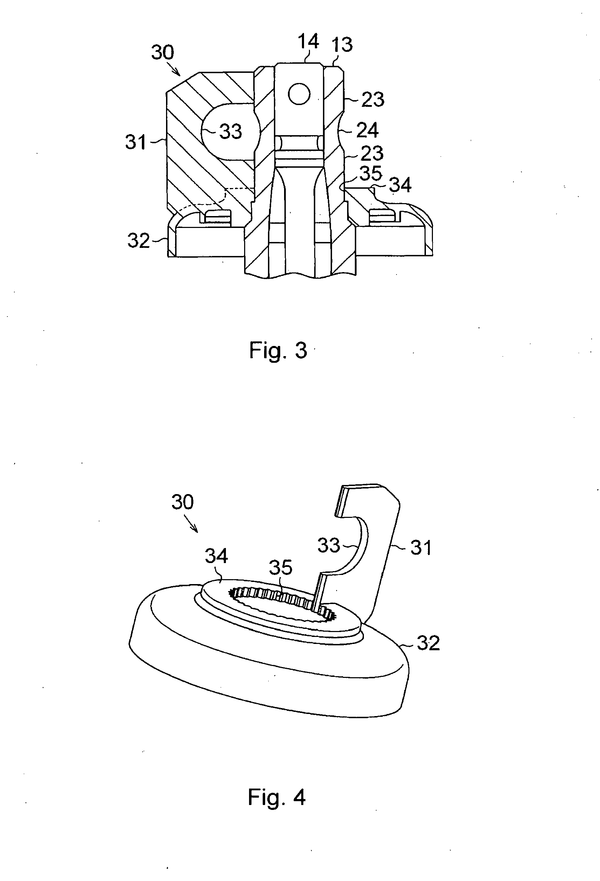

As shown in FIG. 3 and FIG. 4, the guide cover 30 has a cover portion 32 and a plate-like guide portion 31 that are formed integrally with each other. The cover portion 32 covers the upper end opening portion of the valve housing 16. The guide portion 31 is inserted in and engaged with the slit 7 of the lower joint yoke 5. The cover portion 32 has a hole at its center. The input shaft 13 is passed through the hole. The inner wall of cover portion 32 has serrations 35. The serrations 35 are engaged with the serrations 23 formed at the upper end portion of the input shaft 13. The serrations 23 of the input shaft 13 are press-fitted to the serrations 35.

The guide portion 31 protrudes outward in the radial direction of the input shaft 13, extends in the axial direction of the input shaft 13, and contacts the outer periphery of the input shaft 13. The guide portion 31 has a cutout recess 33. The bolt 9 is passed through the cutout recess 33. In addition, the cover portion 32 has a stepped portion 34 at its upper face. The lower face of the lower joint yoke 5 contacts the stepped portion 34 when the lower joint yoke 5 is connected to the input shaft 13. It is possible to position the lower joint yoke 5 in the axial direction with respect to the input shaft 13 by bringing the lower face of the lower joint yoke 5 into contact with the stepped portion 34.

Next, assembly of the thus configured steering system 1 will be described. As shown in FIG. 1, when the lower joint yoke 5 is connected to the input shaft 13, it is necessary to position the lower joint yoke 5 with respect to the input shaft 13 in the circumferential direction in advance. Therefore, the slit 7 of the lower joint yoke 5 is aligned with the guide portion 31 of the guide cover 30 attached to the input shaft 13, and then the input shaft 13 is fitted into the connection hole 6 of the lower joint yoke 5. At this time, the serrations 23 of the input shaft 13 are engaged with the serrations around the connection hole 6, and the input shaft 13 and the lower joint yoke 5 are connected to each other so as to be rotatable together with each other.

In addition, the lower end of the lower joint yoke 5 contacts the upper face of the stepped portion 34 of the guide cover 30 to thereby position the input shaft 13 in the axial direction with respect to the lower joint yoke 5. Then, the bolt 9 is passed through the tapped hole 8 and the cutout recess 33 of the guide portion 31 and fixedly screwed. In this way, the input shaft 13 and the lower joint yoke 5, and, consequently, the input shaft 13 and the lower universal joint 3, are connected to each other so as to be rotatable together with each other.

In the present embodiment, the guide cover 30 has the cover portion 32 that functions as a cover that covers the upper end opening portion of the valve housing 16 and the guide portion 31 that is inserted into the slit 7 of the lower joint yoke 5 is attached to the upper end of the input shaft 13. The cover portion 32 and the guide portion 31 are formed integrally with each other. In addition, the inner wall of the cover portion 32, which defines the center hole, has the serrations 35 that are engaged with the serrations 23 of the input shaft 13. With this configuration, the cover portion 32 is attached to the input shaft 13 so as to be rotatable together with the input shaft 13. Therefore, the function of the ring portion that is fitted to the shaft in the related art is imparted to the cover portion 32 and then the ring portion is omitted. Therefore, it is possible to reduce the axial length of the input shaft 13.

According to the above-described embodiment, the following advantageous effects are obtained.
(1) There is provided the guide cover 30 that has the cover portion 32 and the guide portion 31 formed integrally with each other and that is attached to the input shaft 13 so as to be rotatable together with the input shaft 13. Therefore, in comparison with the structure that includes two members, that is, the guide tip 126, formed of the guide portion 127 and the ring portion 128, and the dust cover 125 as in the case of the related art shown in FIG. 5, the ring portion 128 is omitted in the above-described embodiment. Therefore, it is possible to reduce the axial length of the shaft member. In addition, the number of members is reduced, so it is possible to improve the efficiency of assembly.
(2) When the input shaft 13 is fitted to the lower joint yoke 5, the base end of the lower joint yoke 5 contacts the stepped portion 34 formed on the upper face of the guide cover 30. This makes it possible to position the lower joint yoke 5 in the axial direction with respect to the input shaft 13. As a result, it is possible to easily fit the input shaft 13 and the lower joint yoke 5 to each other.
(3) Because the guide cover 30 is press-fitted to the input shaft 13, it is possible to prevent separation of the input shaft 13 and the guide cover 30 from each other, and it is possible to increase sealing performance.

Note that the above-described embodiment may be modified into the following alternatively embodiments.

In the above-described embodiment, the configuration in which the guide cover 30 is press-fitted to the input shaft 13 may be omitted.

In the above-described embodiment, if positioning is allowed to be performed separately, the stepped portion 34 may be omitted.

In the above-described embodiment, the coupling structure for coupling the lower universal joint 3 to the input shaft 13 is illustrated. However, in the case of a steering shaft in which the pinion shaft 11 is connected to the lower universal joint 3, the invention may be applied to a coupling structure for coupling the lower universal joint 3 to the pinion shaft 11.

In addition, the invention may be applied to a coupling structure for coupling an upper universal joint to an intermediate shaft.

In the above-described embodiment, the invention is applied to the coupling structure for the steering system 1. However, the invention is not limited to the steering system 1. The invention may be applied to a system that has a coupling structure for coupling a shaft to a universal joint.

## Claims

1. A shaft coupling structure that includes a shaft member (13) that is rotatably accommodated in a housing (16) with one end of the shaft member (13) protruding from an opening portion of the housing (16), and a tubular member (5) that is coupled to the one end of the shaft member (13) so as to be non-rotatable relative to the one end of the shaft member (13), wherein:
the tubular member (5) has a slit (7) that axially extends from an open end portion of the tubular member (5); and
a guide cover (30) is fitted around the shaft member (13) so as to be rotatable together with the shaft member (13); wherein
the guide cover (30) is formed of
a guide portion (31) that protrudes radially outward from the shaft member (13) and that is engageable with the slit (7) of the tubular member (5), and
a cover portion (32) that is fitted around the shaft member (13), wherein the guide portion (31) and the cover portion (32) are formed integrally with each other,
**characterized in that**
the cover portion (32) is attached to an upper end opening portion of the housing (16) and covers the upper end opening portion of the housing (16) and is adapted to prevent entry of dust into the housing (16).

2. The shaft coupling structure according to claim 1, wherein
a step portion (34) that the open end portion of the tubular member (5) contacts when the shaft member (13) is fitted to the tubular member (5) is formed on an upper face of the guide cover (30).

3. The shaft coupling structure according to claim 1 or 2, wherein
an inner diameter of the guide cover (30) is set to such a size that the guide cover (30) is press-fitted to the shaft member (13).

4. A steering system **characterized in that** a shaft (13) and a universal joint (3) that constitute a steering shaft are coupled to each other by the shaft coupling structure according to any one of claims 1 to 3.

## Patentansprüche

1. Wellenkoppelstruktur mit einem Wellenelement (13), welches drehbar in einem Gehäuse (16) aufgenommen ist, wobei ein Ende des Wellenelements (13) von einem Öffnungsabschnitt des Gehäuses (16) vorspringt, und einem rohrförmigen Element (5), welches mit dem einen Ende des Wellenelements (13) so gekoppelt ist, um nicht drehbar relativ zu dem einen Ende des Wellenelements (13) zu sein, wobei:
das rohrförmige Element (5) einen Schlitz (7) aufweist, welches sich axial von einem offenen Endabschnitt des rohrförmigen Elements (5) erstreckt; und
eine Führungsabdeckung (30) um das Wellenelement (13) so befestigt ist, um drehbar zusammen mit dem Wellenelement (13) zu sein; wobei die Führungsabdeckung (30) aus einem Führungsabschnitt (31), welcher von dem Wellenelement (13) radial auswärts vorspringt und welcher mit dem Schlitz (7) des rohrförmigen Elements (5) in Eingriff bringbar ist, und
aus einem Abdeckabschnitt (32) ausgebildet ist, welcher um das Wellenelement (13) befestigt ist, wobei der Führungsabschnitt (31) und der Abdeckabschnitt (32) einstückig miteinander ausgebildet sind,
**dadurch gekennzeichnet, dass**
der Abdeckabschnitt (32) an einem oberen Endöffnungsabschnitt des Gehäuses (16) befestigt ist und den oberen Endöffnungsabschnitt des Gehäuses (16) abdeckt sowie dazu geeignet ist, um ein Eindringen von Staub in das Gehäuse (16) zu verhindern.

2. Wellenkoppelstruktur nach Anspruch 1, wobei ein Absatzabschnitt (34), welcher den offenen Endabschnitt des rohrförmigen Elements (15) berührt, wenn das Wellenelement (13) mit dem rohrförmigen Element (5) befestigt ist, an einer oberen Fläche der Führungsabdeckung (30) ausgebildet ist.

3. Wellenkoppelstruktur nach Anspruch 1 oder 2, wobei ein Innendurchmesser der Führungsabdeckung (30) auf so eine Größe eingestellt ist, dass die Führungsabdeckung (30) auf das Wellenelement (13) eingepresst ist.

4. Lenksystem, **dadurch gekennzeichnet, dass** eine Welle (13) und ein Universalgelenk (3), welche eine Lenkwelle ausbilden, mittels der Wellenkoppelstruktur nach einem der Ansprüche 1 bis 3 miteinander gekoppelt sind.

## Revendications

1. Structure de couplage d'arbre qui inclut un élément d'arbre (13) qui est logé de façon à tourner dans un carter (16) avec une extrémité de l'élément d'arbre (13) faisant saillie depuis une partie d'ouverture du carter (16), et un élément tubulaire (5) qui est couplé à l'une extrémité de l'élément d'arbre (13) de façon à ne pas pouvoir tourner relativement à l'une extrémité de l'élément d'arbre (13), dans laquelle :
l'élément tubulaire (5) comporte une fente (7) qui s'étend axialement depuis une partie d'extrémité ouverte de l'élément tubulaire (5) ; et
un couvercle de guidage (30) qui est monté autour de l'élément d'arbre (13) de façon à pouvoir tourner conjointement avec l'élément d'arbre (13) ; dans laquelle
le couvercle de guidage (30) est formé par
une partie de guidage (31) qui fait saillie autour de l'élément d'arbre (13) et qui peut venir en prise avec la fente (7) de l'élément tubulaire (5), et
une partie de couvercle (32) qui est montée autour de l'élément d'arbre (13), dans laquelle la partie de guidage (31) et la partie de couvercle (32) sont formées d'un seul bloc,
**caractérisée en ce que**
la partie de couvercle (32) est fixée sur une partie d'ouverture d'extrémité supérieure du carter (16) et couvre la partie d'ouverture d'extrémité supérieure du carter (16) et est adaptée pour empêcher l'entrée de poussière dans le carter (16).

2. Structure de couplage d'arbre selon la revendication 1, dans laquelle
une partie de bossage (34) avec laquelle la partie d'extrémité ouverte de l'élément tubulaire (5) entre en contact quand l'élément d'arbre (13) est monté sur l'élément tubulaire (5) est formée sur une face supérieure du couvercle de guidage (30).

3. Structure de couplage d'arbre selon la revendication 1 ou 2, dans laquelle
un diamètre intérieur du couvercle de guidage (30) est réglé à une taille telle que le couvercle de guidage (30) monté à la presse sur l'élément d'arbre (13).

4. Système de direction **caractérisé en ce qu'**un arbre (13) et un joint universel (3) qui constituent un arbre de direction sont couplés ensemble par la structure de couplage d'arbre selon l'une quelconque des revendications 1 à 3.
